(19) Europäisches Patentamt
European Patent Office
Office européen des brevets

(11) EP 3 645 577 B1

(12) **FASCICULE DE BREVET EUROPEEN**

(45) Date de publication et mention de la délivrance du brevet:
**09.11.2022 Bulletin 2022/45**

(21) Numéro de dépôt: **18749015.6**

(22) Date de dépôt: **27.06.2018**

(51) Classification Internationale des Brevets (IPC):
***C08C 19/10*** (2006.01) ***B60C 1/00*** (2006.01)
***C08C 19/22*** (2006.01) ***C08F 236/10*** (2006.01)

(52) Classification Coopérative des Brevets (CPC):
**C08C 19/10; B60C 1/0016; C08C 19/22; C08F 236/10**

(86) Numéro de dépôt international:
**PCT/FR2018/051566**

(87) Numéro de publication internationale:
**WO 2019/002758 (03.01.2019 Gazette 2019/01)**

# (54) COMPOSITION DE CAOUTCHOUC COMPRENANT UN ELASTOMÈRE DIÉNIQUE FONCTIONNALISE PAR DES GROUPES IMIDAZOLE

KAUTSCHUKZUSAMMENSETZUNG MIT EINEM DURCH IMIDAZOLGRUPPEN FUNKTIONALISIERTEN DIENELASTOMER

RUBBER COMPOSITION COMPRISING A DIENE ELASTOMER FUNCTIONALISED BY IMIDAZOLE GROUPS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.06.2017 FR 1755936**

(43) Date de publication de la demande:
**06.05.2020 Bulletin 2020/19**

(73) Titulaire: **Compagnie Générale des Etablissements Michelin**
**63000 Clermont-Ferrand (FR)**

(72) Inventeurs:
- **MAISONNEUVE, Lise**
  **63040 Clermont-Ferrand Cedex 9 (FR)**
- **SCHNELL, Benoit**
  **63040 Clermont-Ferrand Cedex 9 (FR)**
- **DRONET, Séverin**
  **63040 Clermont-Ferrand Cedex 9 (FR)**

(74) Mandataire: **Gandon-Pain, Sylvie**
**Manufacture Française des Pneumatiques Michelin**
**CBS/CORP/J/PI - F35 - Ladoux**
**23, place des Carmes-Déchaux**
**63040 Clermont-Ferrand Cedex 9 (FR)**

(56) Documents cités:
**FR-A1- 3 023 843 US-A1- 2011 054 134**

- **YASUHITO KOYAMA ET AL: "Cascade functionalization of unsaturated bond-containing polymers using ambident agents possessing both nitrile N-oxide and electrophilic functions", CHEMICAL COMMUNICATIONS, vol. 48, no. 83, 1 janvier 2012 (2012-01-01), page 10304, XP055461889, GB ISSN: 1359-7345, DOI: 10.1039/c2cc35158g**

EP 3 645 577 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

La présente invention concerne des compositions de caoutchouc utilisables dans des pneumatiques, en particulier dans des bandes de roulement pour pneumatique.

Une bande de roulement de pneumatique doit obéir de manière connue à un grand nombre d'exigences techniques, souvent antinomiques, parmi lesquelles une faible résistance au roulement, une résistance élevée à l'usure, ainsi qu'une adhérence élevée sur route sèche comme mouillée. Ce compromis de propriétés, en particulier du point de vue de la résistance au roulement et de la résistance à l'usure, a pu être amélioré ces dernières années sur les « Pneus Verts » à faible consommation d'énergie, destinés notamment aux véhicules tourisme, grâce notamment à l'emploi de nouvelles compositions de caoutchouc faiblement hystérétiques ayant pour caractéristique d'être renforcées majoritairement de silices hautement dispersibles dites "HDS" (Highly Dispersible Silica), capables de rivaliser, du point de vue du pouvoir renforçant, avec les noirs de carbone conventionnels de grade pneumatique.

Pour ce qui est de l'adhérence, il est connu de l'améliorer en utilisant des compositions de caoutchouc dans une bande de roulement de pneumatique qui contiennent des charges renforçantes ou des agents plastifiants à fort taux ou bien des élastomères diéniques de haute température de transition vitreuse (Tg). Il est aussi connu que la Tg d'un élastomère diénique augmente avec l'introduction dans la chaîne élastomère de motifs styrène. Cet effet de l'incorporation de motifs styrène sur la Tg de l'élastomère diénique a conduit les manufacturiers du pneumatique à utiliser des copolymères de butadiène et de styrène (SBR) pouvant aller jusqu'à environ 40% en masse de motifs styrène dans les compositions de caoutchouc pour bande de roulement de pneumatique pour augmenter l'adhérence des pneumatiques.

Pour obtenir une forte augmentation de la Tg de l'élastomère diénique, il est nécessaire d'introduire dans la chaîne élastomère suffisamment de motifs styrène. Or l'introduction de motifs styrène dans une chaîne élastomère diénique présente des inconvénients, car elle s'accompagne d'une diminution de la rigidité de l'élastomère diénique. Toute chose étant égale par ailleurs, une diminution de la rigidité de l'élastomère diénique conduit inexorablement à une diminution de la rigidité de la composition de caoutchouc contenant l'élastomère diénique. Comme une diminution de la rigidité de la composition de caoutchouc se traduit par une diminution de sa résistance à l'usure, on observe aussi une diminution de la performance du pneumatique en usure. Il est donc une préoccupation pour les manufacturiers de pneumatique de trouver une alternative à l'utilisation des SBR qui ne présente pas les inconvénients précités et présente un meilleur compromis entre la température de transition vitreuse et la rigidité pour améliorer in fine le compromis de performance entre l'adhérence et l'usure d'un pneumatique.

Ainsi un premier objet de l'invention est une composition de caoutchouc à base au moins d'un élastomère diénique modifié et d'une charge renforçante, lequel élastomère diénique modifié est le produit de réaction d'un élastomère diénique de départ et d'un oxyde de nitrile aromatique, composé comportant un noyau benzénique substitué par un dipôle oxyde de nitrile, le taux d'oxyde de nitrile aromatique greffé étant compris dans un domaine allant de 18% à 50% en masse de l'élastomère diénique modifié, le noyau benzénique de l'oxyde de nitrile aromatique étant substitué par un ou plusieurs substituants dont un est en ortho du dipôle oxyde de nitrile.

Un autre objet de l'invention est une bande de roulement pour pneumatique qui comprend une composition de caoutchouc conforme à l'invention.

Un autre objet de l'invention est un pneumatique qui comprend une composition de caoutchouc conforme à l'invention.

L' élastomère diénique est modifié par réaction d'un élastomère diénique de départ et d'un oxyde de nitrile aromatique, composé comportant un noyau benzénique substitué par un dipôle oxyde de nitrile, le taux d'oxyde de nitrile aromatique greffé étant compris dans un domaine allant de 18% à moins de 50% en masse de l'élastomère diénique modifié, le noyau benzénique de l'oxyde de nitrile aromatique étant substitué par un ou plusieurs substituants dont un est en ortho du dipôle oxyde de nitrile, élastomère diénique dans lequel les substituants du noyau benzénique, identiques ou différents, sont un alkyle en C1-C2, un alkoxy en C1-C2 ou contiennent un cycle dont un atome est lié au noyau benzénique par l'intermédiaire de 3 liaisons au plus ou bien forment avec leurs plus proches voisins un cycle avec les atomes de carbone du noyau benzénique auxquels ils sont rattachés, à la condition qu'au moins un des substituants contient un cycle dont un atome est lié au noyau benzénique par l'intermédiaire de 3 liaisons au plus ou à la condition qu'au moins deux des substituants en ortho l'un par rapport à l'autre forment un cycle avec les atomes de carbone du noyau benzénique auxquels ils sont rattachés.

### I. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs

supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression composition "à base de", il faut entendre dans la présente description une composition comportant le mélange et/ou le produit de réaction in situ des différents constituants utilisés, certains de ces constituants de base (par exemple l'élastomère, la charge ou autre additif classiquement utilisé dans une composition de caoutchouc destinée à la fabrication de pneumatique) étant susceptibles de, ou destinés à réagir entre eux, au moins en partie, lors des différentes phases de fabrication de la composition destinée à la fabrication de pneumatique.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges....

La composition de caoutchouc conforme à l'invention a pour caractéristique essentielle d'être à base au moins d'un élastomère diénique modifié. L'élastomère diénique modifié est le produit de réaction d'un élastomère diénique de départ et d'un oxyde de nitrile aromatique.

L'oxyde de nitrile aromatique est un composé comportant un noyau benzénique substitué par un dipôle oxyde de nitrile. De préférence, l'oxyde de nitrile aromatique est un monooxyde de nitrile. Autrement dit, la molécule de l'oxyde de nitrile aromatique contient un seul dipôle oxyde de nitrile. Le noyau benzénique de l'oxyde de nitrile aromatique a pour caractéristique essentielle d'être substitué par un ou plusieurs substituants dont un est en ortho du dipôle. Les substituants du noyau benzénique peuvent être identiques ou différents. Dans la présente demande, le terme « substituant du noyau benzénique » désigne un substituant du noyau benzénique autre que le dipôle oxyde de nitrile.

Selon un mode de réalisation de l'invention, les substituants du noyau benzénique sont, indépendamment les uns des autres, en ortho ou en méta du dipôle oxyde de nitrile, sachant qu'au moins l'un d'eux est en ortho. Autrement dit, selon ce mode de réalisation, tout substituant du noyau benzénique autre que celui en ortho est en ortho ou en méta du dipôle oxyde de nitrile. De préférence, les substituants du noyau benzénique, identiques ou différents, sont un alkyle en C1-C2, un alkoxy en C1-C2 ou contiennent un cycle dont un atome est lié au noyau benzénique par l'intermédiaire de 3 liaisons au plus ou bien forment avec leurs plus proches voisins un cycle avec les atomes de carbone du noyau benzénique auxquels ils sont rattachés. Lorsque les substituants forment avec leurs plus proches voisins un cycle comme mentionné précédemment, il est compris qu'au moins deux des substituants du noyau benzénique en ortho l'un par rapport à l'autre sont reliés entre eux pour former le cycle avec les atomes de carbone du noyau benzénique auxquels ils sont rattachés. Lorsqu'au moins un des substituants contient un cycle comme mentionné précédemment, un des atomes du cycle est lié à un atome de carbone du cycle benzénique par l'intermédiaire de 3 liaisons au plus. Il apparaît que plus le cycle est proche du noyau benzénique, parce qu'il a des atomes de carbone en commun avec le noyau benzénique substitué par le dipôle ou parce qu'il est au plus de 3 liaisons d'un atome de carbone du noyau benzénique substitué par le dipôle, plus le compromis Tg rigidité est favorable vis-à-vis du compromis adhérence usure.

L'alkyle contient 1 à 2 atomes de carbone et est désigné sous l'appellation alkyle en C1-C2. De préférence, l'alkyle est un méthyle. L'alkoxy contient 1 à 2 atomes de carbone et est désigné sous l'appellation alkoxy en C1-C2. L'alkoxy en C1-C2 répond de façon conventionnelle à la formule RO dans laquelle R représente un alkyle en C1-C2. De préférence, l'alkoxy est un méthoxy.

De préférence, le cycle, qu'il soit contenu dans un substituant ou formé par un substituant et son plus proche voisin, est de structure plane. A titre de structure cyclique plane, on peut citer les cycles hydrocarbonés de structure plane, les hétérocycles de structure plane, les cycles aromatiques, en particulier les cycles hydrocarbonés aromatiques condensés tels que la structure anthracène. De manière plus préférentielle, le cycle de structure plane est un cycle à 5 ou 6 membres. A titre de structure cyclique plane à 5 membres, on peut citer les hétérocycles à 5 membres dont 2 sont des atomes d'azote, c'est-à-dire un hétérocycle diazoté à 5 membres. Convient tout particulièrement comme hétérocycle diazoté à 5 membres le cycle imidazole. Typiquement, le substituant contient le groupe imidazolyle ou le groupe 2-méthylimidazolyle lorsque le substituant contient un cycle imidazole. A titre de structure cyclique plane à 6 membres, on peut citer le noyau benzénique. Typiquement, l'oxyde de nitrile aromatique est un dérivé naphtyle ou anthracényle, lorsque les substituants forment un noyau benzénique qui est condensé avec le noyau benzénique substitué par le dipôle.

Lorsque le cycle est lié par l'intermédiaire de 3 liaisons au plus au noyau benzénique, il l'est par l'intermédiaire d'un espaceur. L'espaceur qui a donc pour fonction de relier le cycle au noyau benzénique peut être un hétéroatome ou une chaîne carbonée pouvant contenir un ou plusieurs hétéroatomes. A titre d'espaceurs conviennent tout particulièrement les chaînes divalentes de formules $CH_2$, $CH_2$-$CH_2$, $OCH_2$, $NCH_2$ ; pour les deux derniers espaceurs $OCH_2$ et $NCH_2$, les atomes O et N forment une liaison covalente avec un atome de carbone du noyau benzénique du dipôle oxyde de nitrile.

A titre d'exemple d'oxydes de nitrile aromatiques utiles aux besoins de l'invention, on peut citer les composés de formule (I) à (V) suivantes :

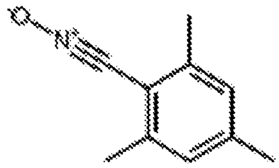 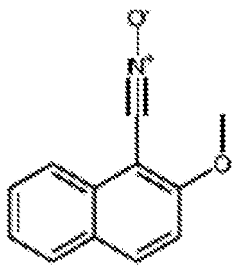 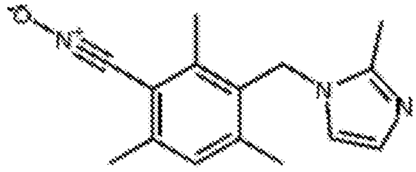

(I) (II) (III)

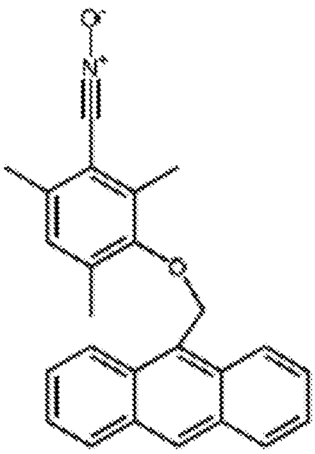 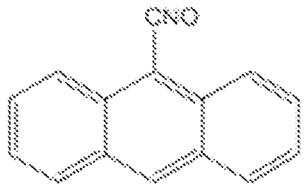

(IV) (V)

L'oxyde de nitrile aromatique est préférentiellement le composé de formule (II) ou (III).

Comme cela est connu de l'homme du métier, la réaction d'un élastomère diénique et d'un oxyde de nitrile aromatique procède d'une réaction de cycloaddition [3+2] du dipôle sur une unité diénique de l'élastomère. La structure qui résulte de cette cycloaddition est un motif 2-isoxazoline. Le schéma 1 donne une illustration des structures obtenues dans le cas de la modification d'unités 1,2 ou 1,4 de polybutadiène, le symbole ¤ représentant le reste de la molécule de l'oxyde de nitrile aromatique ayant réagi.

Schéma 1 :

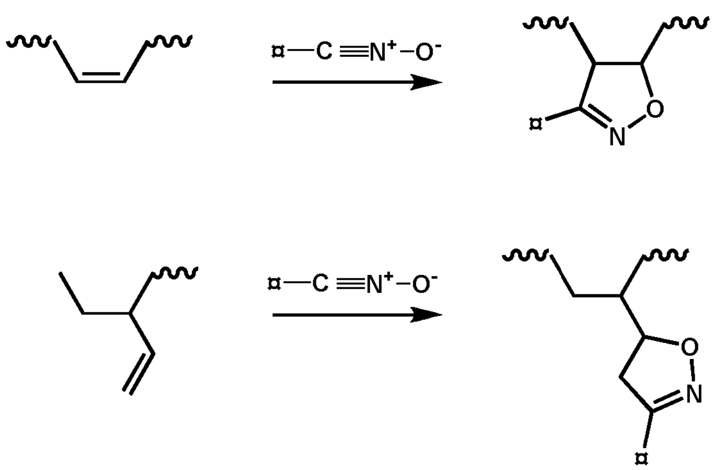


Il s'en suit que l'élastomère diénique modifié contient des motifs 2-isoxazoline substitués par le noyau benzénique lui-même substitué conformément à l'invention.

Le taux d'oxyde de nitrile aromatique greffé sur l'élastomère diénique est compris dans un domaine allant de 18% à moins de 50% en masse de l'élastomère diénique modifié. Ce taux, exprimé en pourcentage massique, est égal au rapport entre la masse d'oxyde de nitrile aromatique greffé sur la masse de l'élastomère diénique modifié. L'introduction dans l'élastomère de motif résultant du greffage d'oxyde de nitrile aromatique à un taux allant de 18% à moins de 50% permet d'augmenter fortement la Tg de l'élastomère sans qu'elle ne s'accompagne d'une diminution de la rigidité à la hauteur de l'augmentation de la Tg. En effet, dans cette gamme de taux de modification, une faible variation du taux massique de greffon suffit pour augmenter fortement la Tg. Dans une gamme de taux inférieurs à 18%, une variation de la Tg du même ordre de grandeur nécessite une variation plus forte de la masse de greffons à introduire dans la chaîne, ce qui s'accompagne inexorablement d'une diminution de la rigidité dont l'ampleur est fonction de la quantité massique de greffon introduit. En effet, dans la gamme de taux inférieurs à 18%, une variation du taux massique de greffon provoque une variation de la Tg de plus faible ampleur. La corrélation entre l'augmentation de Tg et la diminution de la rigidité est modifiée pour des taux massiques allant de 18 à moins de 50%. L'utilisation de composition de caoutchouc selon l'invention permet donc d'améliorer le compromis entre l'adhérence et la résistance à l'usure. A 50% ou au-delà, la température de transition vitreuse devient trop élevée, notamment proche de la température ambiante, ce qui ôte l'intérêt d'utiliser l'élastomère diénique dans une composition de caoutchouc pour pneumatique. De préférence, la masse d'oxyde de nitrile aromatique greffé est compris dans un domaine allant de 20% à 41% en masse de l'élastomère diénique modifié.

L'élastomère diénique de départ est choisi en fonction de la valeur de Tg qui est visée pour l'élastomère diénique modifié, mais aussi en fonction de la valeur de rigidité désirée de l'élastomère diénique modifié. Compte tenu des fortes variations de Tg que peut induire la modification à des taux d'au moins 18%, l'homme du métier choisit la microstructure de l'élastomère diénique de départ, l'oxyde de nitrile aromatique et le taux de modification qui conduisent à l'élastomère diénique modifié qui est le plus approprié à l'usage envisagé de la composition de caoutchouc qui contient l'élastomère diénique modifié.

L'élastomère diénique de départ est tout élastomère diénique. Par élastomère (ou indistinctement caoutchouc) "diénique", doit être compris de manière connue un (ou plusieurs) élastomère constitué au moins en partie (i.e., un homopolymère ou un copolymère) d'unités monomères diènes (monomères porteurs de deux doubles liaisons carbone-carbone, conjuguées ou non). A titre d'élastomère diénique conviennent par exemple les élastomères choisis dans le groupe constitué par les polybutadiènes, les polyisoprènes, les copolymères de 1,3-butadiène et les copolymères d'isoprène. Parmi les copolymères de 1,3-butadiène et les copolymères d'isoprène, on peut citer notamment les copolymères contenant plus de 50% en mole de monomère diène conjugué. Préférentiellement l'élastomère diénique de départ est choisi dans le groupe des élastomères constitué par les polybutadiènes, les polyisoprènes, les copolymères d'isoprène et de 1,3-butadiène, les copolymères de 1,3-butadiène et de styrène, les copolymères d'isoprène et de styrène, les terpolymères de 1,3-butadiène, d'isoprène et de styrène et les mélanges de ces élastomères.

Plus préférentiellement, l'élastomère diénique de départ est un élastomère de synthèse. Le caoutchouc naturel n'est pas considéré comme un élastomère de synthèse, puisqu'il est récolté par saignée des hévéas.

La réaction de l'élastomère diénique de départ et de l'oxyde de nitrile aromatique peut être réalisée en masse, par exemple dans un mélangeur interne ou un mélangeur externe tel qu'un mélangeur à cylindres. La réaction est alors mise en œuvre soit à une température du mélangeur externe ou du mélangeur interne inférieure à 60°C, suivie d'une étape sous presse ou en étuve à des températures allant de 80°C à 200°C, soit à une température du mélangeur externe ou du mélangeur interne supérieure à 60°C sans traitement thermique postérieur. Lorsque la réaction est réalisée en masse, elle peut être conduite dans le même mélangeur que celui utilisé pour fabriquer la composition de caoutchouc conforme à l'invention. Typiquement on fait réagir l'élastomère diénique de départ et l'oxyde de nitrile aromatique dans le mélangeur avant l'introduction dans le mélangeur interne de la charge renforçante et des autres ingrédients de la composition de caoutchouc. Lorsque la réaction est réalisée en masse, elle est réalisée préférentiellement en présence d'un antioxydant. La réaction peut également être effectuée en solution en continu ou en discontinu. L'élastomère diénique ainsi modifié peut être séparé de sa solution par tout type de moyen connu par l'homme de l'art et en particulier par une opération de stripping à la vapeur d'eau.

La charge renforçante peut être tout type de charge dite renforçante, connue pour ses capacités à renforcer une composition de caoutchouc utilisable pour la fabrication de pneumatiques, par exemple une charge organique telle que du noir de carbone, une charge inorganique renforçante telle que de la silice à laquelle est associé de manière connue un agent de couplage, ou encore un mélange de ces deux types de charge. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. La charge renforçante peut être utilisée à un taux compris entre 30 et 200 parties en poids pour cent parties de la matrice élastomère (pce). Par matrice élastomère, on entend dans la présente invention l'ensemble des élastomères présents dans la composition de caoutchouc, qu'ils soient conformes ou non à l'invention.

La composition de caoutchouc peut effectivement contenir un élastomère autre que celui conforme à l'invention,

notamment un élastomère diénique traditionnellement utilisé dans les compositions de caoutchouc. La composition de caoutchouc comprend préférentiellement plus de 50 pce, plus préférentiellement plus de 80 pce de l'élastomère conforme à l'invention décrit selon l'un quelconque des modes de réalisation de l'invention.

La composition de caoutchouc peut contenir un système de réticulation de l'élastomère. Le système de réticulation peut être un système de vulcanisation ou être à base d'un ou plusieurs composés peroxydes, par exemple conventionnellement utilisés dans les compositions de caoutchouc utilisables pour la fabrication de pneumatique. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. Le soufre est utilisé à un taux préférentiel compris entre 0,5 et 12 pce, en particulier entre 1 et 10 pce. L'accélérateur primaire de vulcanisation est utilisé à un taux préférentiel compris entre 0,5 et 10 pce, plus préférentiellement compris entre 0,5 et 5,0 pce.

La composition de caoutchouc peut contenir en outre d'autres additifs connus pour être utilisés dans des compositions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique. En particulier, la composition de caoutchouc peut être utilisée comme bande de roulement pour pneumatique, autre objet de l'invention.

Le pneumatique selon l'invention a pour caractéristique essentielle de comprendre une composition de caoutchouc conforme à l'invention, de préférence dans sa bande de roulement. Un tel pneumatique, de par le compromis amélioré entre la valeur de Tg de l'élastomère diénique et la valeur de sa rigidité, voit aussi son compromis de performance amélioré entre l'adhérence et la résistance à l'usure.

L'élastomère diénique est un élastomère diénique modifié par réaction d'un élastomère diénique de départ et d'un oxyde de nitrile aromatique, le taux d'oxyde de nitrile aromatique greffé étant compris dans un domaine allant de 18% à moins de 50% en masse de l'élastomère diénique modifié, le noyau benzénique de l'oxyde de nitrile aromatique étant substitué par un ou plusieurs substituants dont un est en ortho du dipôle oxyde de nitrile. Dans l'élastomère, les substituants du noyau benzénique, identiques ou différents, sont un alkyle en C1-C2, un alkoxy en C1-C2 ou contiennent un cycle dont un atome est lié au noyau benzénique par l'intermédiaire de 3 liaisons au plus ou bien forment avec leurs plus proches voisins un cycle avec les atomes de carbone du noyau benzénique auxquels ils sont rattachés. L'élastomère a aussi pour autre caractéristique essentielle l'une des caractéristiques suivantes :

- au moins un des substituants contient un cycle dont un atome est lié au noyau benzénique par l'intermédiaire de 3 liaisons au plus ;
- deux des substituants en ortho l'un par rapport à l'autre forment un cycle avec les atomes de carbone du noyau benzénique auxquels ils sont rattachés.

Les polyoxydes de nitrile aromatiques, composés aromatiques contenant plusieurs oxyde de nitrile au sein de leur molécule, étant connus pour réticuler les élastomères diéniques, l'oxyde de nitrile aromatique utilisé dans la réaction pour modifier l'élastomère diénique de départ est avantageusement est un monooxyde de nitrile.

L'alkyle est de préférence méthyle; l'alkoxy de préférence méthoxy; le cycle est typiquement un cycle tel que défini dans les modes de réalisation décrits précédemment, préférentiels ou non, relatifs à la composition.

En particulier, l'élastomère est modifié par réaction d'un oxyde de nitrile aromatique de formule (II), (III), (IV) ou (V).

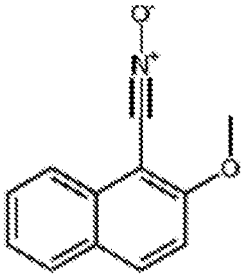

(II)

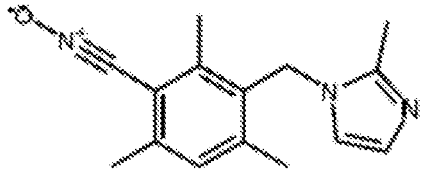

(III)

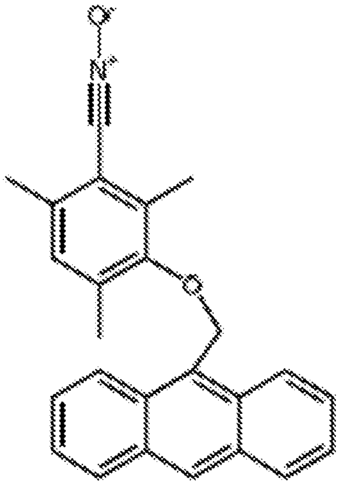

(IV)

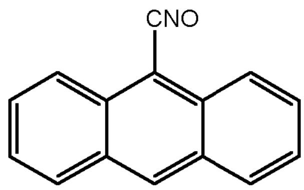

(V)

De préférence, l’élastomère diénique de départ est choisi dans le groupe des élastomères constitué par les polybutadiènes, les polyisoprènes, les copolymères de 1,3-butadiène, les copolymères d’isoprène et leurs mélanges. En particulier, l’élastomère diénique de départ est un élastomère de synthèse.

L’élastomère diénique est préférentiellement un élastomère dans lequel le taux d’oxyde de nitrile aromatique greffé représente de 20 à 41% en masse de l’élastomère diénique modifié.

Les caractéristiques précitées de la présente invention, ainsi que d’autres, seront mieux comprises à la lecture de la description suivante de plusieurs exemples de réalisation de l’invention, donnés à titre illustratif et non limitatif.

## II. EXEMPLES DE REALISATION DE L’INVENTION

### II.1 Préparation des polymères modifiés :

L’élastomère de départ est un copolymère de 1,3-butadiène et de styrène (SBR) contenant 26% en masse de styrène et de Tg -48°C.

Les oxydes de nitrile aromatique sont les composés ON1 à ON4.

| | |
|---|---|
| 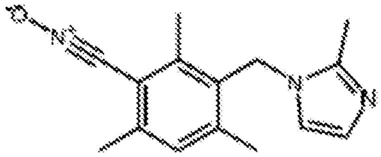 | ON1 |
| 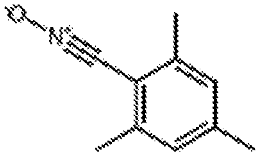 | ON2 |

(suite)

| | |
|---|---|
| 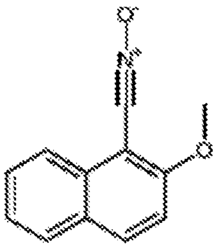 | ON3 |
| 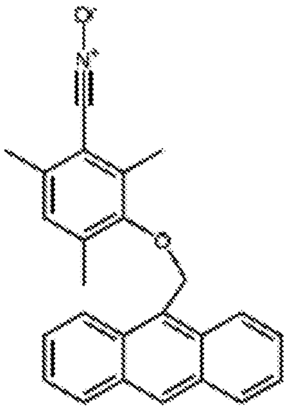 | ON4 |

L'élastomère de départ est modifié selon le mode opératoire suivant :
L'élastomère de départ et l'oxyde de nitrile aromatique sont solubilisés dans le tétrahydrofurane ou le dichlorométhane. Le solvant est ensuite évaporé. Le mélange résultant est extrudé dans une microextrudeuse (DSM Xplore) à 120°C pendant 4 minutes. A la sortie de la microextrudeuse, le polymère modifié est récupéré.

Les polymères préparés selon ce mode opératoire sont caractérisés : leur teneur en greffon est déterminée par analyse RMN, leur température de transition vitreuse par DSC et leur rigidité par mesure de leur module au plateau caoutchoutique (valeur de G* à 10Hz à la température du minimum de G" ou de tanδ).

11.2 Caractérisation des polymères :

1) Détermination de la température de transition des polymères :

La température de transition vitreuse est mesurée au moyen d'un calorimètre différentiel ("Differential Scanning Calorimeter") selon la norme ASTM D3418 (1999). L'appareillage utilisé est un calorimètre Mettler Toledo DSC1.

2) Détermination de la rigidité des polymères :

Les mesures sont réalisées sur un rhéomètre Anton Paar modèle MCR302 en mode cisaillement plan/plan avec des éprouvettes cylindriques de géométrie maitrisée (épaisseur comprise entre 1,5mm et 3mm et diamètre de 20 mm). L'échantillon est soumis à une sollicitation sinusoïdale en cisaillement, à une température fixe (correspondant à la fin du passage de la transition vitreuse de l'élastomère et avant l'écoulement sur un balayage en température à 10Hz), et sur une plage fréquentielle allant de 1Hz à 100Hz avec une déformation de 0.1%. La valeur de rigidité retenue comme étant la rigidité du plateau caoutchoutique de l'échantillon est la valeur du module de cisaillement G* pour la fréquence à laquelle le module de perte G" ou tanδ atteint son minimum, conformément à la méthode décrite par C. Liu, J. He, E. van Ruymbeke, R. Keunings, C. Bailly, Evaluation of différent methods for the détermination of the plateau modulus and the entanglement molecular weight, Polymer 47 (2006) 4461-4479.

3) Détermination de la microstructure des polymères et du taux de modification :

Elle se fait par analyse de résonance magnétique nucléaire (RMN). Pour les mesures sur des échantillons solubles, est utilisé un spectromètre Avance III HD 500 MHz Bruker équipé d'une sonde « large bande » cryo-BBFO z-grad 5 mm Bruker. Pour les mesures sur des échantillons non solubles, est utilisé un spectromètre Avance III HD 500

MHz Bruker équipé d'une sonde HR-MAS BBFO 1H-X 5 mm Bruker. Les spectres sont acquis à des vitesses de rotation de 4000 à 5000 Hz.

Les expériences RMN 1D $^1H$ utilisent une séquence simple impulsion avec un angle de basculement de 30°, le nombre de répétitions est de 128 scans avec un délai de recyclage de 5 secondes. Les expériences sont réalisées à 25 °C.

Les échantillons sont préparés comme suit : 25 mg d'échantillon sont solubilisés dans 1 mL de disulfure de carbone ($CS_2$) ; 70 $\mu$L de cyclohexane deutéré ($C_6D_{12}$) sont ajoutés à la solution polymère pour le verrouillage champ-fréquence.

Les déplacements chimiques sont calibrés par rapport à l'impureté protonée du $CS_2$ ($\delta(^1H)$ = 7,18 ppm), référencée sur le tétraméthylsilane (TMS, $\delta(^1H)$ = 0 ppm).

Les déplacements chimiques caractéristiques du greffage de l'oxyde de nitrile sur le SBR sont identifiés dans le tableau ci-dessous, le schéma 2 illustrant les motifs des unités butadiène modifiées par un oxyde de nitrile R'-CNO, le symbole R représentant le reste de la chaîne polymère :

| $\delta$ $^1H$ (ppm) | Motif |
|---|---|
| 2,65 + 2,81 | $CH_2$ n°**2** (greffage BR1-2), H non éq.* |
| 2,8 | CH n°**2'** (greffage BR1-4) |
| 4,1 | CH n°**1'** (greffage BR1-4) |
| 4,4 | CH n°**1** (greffage BR1-2) |
| *H non éq. : protons non équivalents : protons portés par le même carbone n'ayant pas le même déplacement chimique RMN 1H. | |

Schéma 2 :

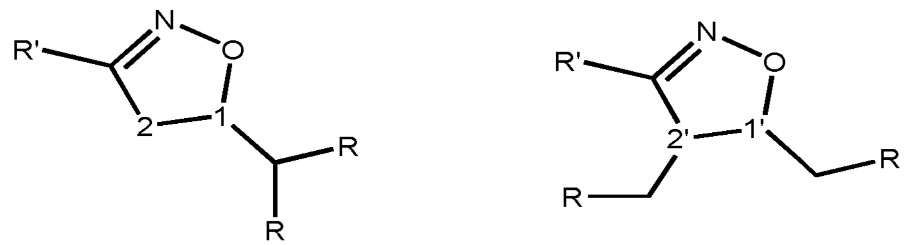

Les quantifications ont été effectuées à partir de l'intégration des spectres RMN 1D $^1H$ à l'aide du logiciel d'acquisition des données.

Les massifs considérés pour la quantification sont :

- ✓ 5 protons du styrène entre 7,4 et 6,2 ppm,
- ✓ 2 protons du BR1-4 et 1 proton du BR1-2 entre 5,6 et 4,9 ppm,
- ✓ 2 protons du BR1-2 entre 4,9 et 4,5 ppm,
- ✓ 1 proton du greffage de l'oxyde de nitrile sur motif BR1-2 à 4,4 ppm,
- ✓ 1 proton du greffage de l'oxyde de nitrile sur motif BR1-4 à 4,1 pm.

II.3 Résultats :

Les résultats figurent dans le tableau 1.

La première colonne du tableau indique l'appellation du polymère modifié.

La deuxième colonne indique l'oxyde de nitrile aromatique utilisé pour modifier le SBR.

La troisième colonne indique le taux massique d'oxyde de nitrile greffé sur le SBR, exprimé en pourcentage par rapport à la masse d'élastomère modifié.

La quatrième colonne indique la variation de Tg du polymère résultant de la modification par rapport à la Tg du SBR de départ.

La cinquième colonne indique l'effet comparé des modifications sur la Tg selon que la modification est une modification par l'oxyde de nitrile aromatique ou selon que la modification est une incorporation de motif styrène sur un BR au même taux massique. L'effet de l'incorporation du motif styrène sur la Tg du BR est alors calculé à partir de la loi de Fox (Fox, T. G. Bull. Am. Phys. SOC. 1956, 2, 123. - Influence of Diluent and of Copolymer Composition on the

Glass Temperature of a Polymer System ), la Tg du BR étant de -92°C. Plus la valeur est grande, plus grande est la variation de Tg de l'élastomère de départ causée par une modification par l'oxyde de nitrile aromatique comparativement à une incorporation de motifs styrène au même taux massique. Une valeur supérieure à 5 traduit une variation de la Tg significativement différente.

Il est observé qu'à des taux inférieurs à 18%, la modification de l'élastomère de départ par le greffage de l'oxyde de nitrile induit une variation de Tg comparable à ce que ferait une incorporation de motifs styrène au même taux massique. En effet, l'effet comparé ($5^{ème}$ colonne) a pour valeur 4 au plus. En revanche, à des taux d'au moins 18%, l'effet comparé indique des valeurs supérieures à 5 qui ne cessent d'augmenter avec le taux de modification pour atteindre des valeurs très supérieures à 5. De façon surprenante, il apparaît une amplification de l'effet du taux massique de greffon sur la variation de Tg, ce qui n'est pas observé dans le cas de l'incorporation du styrène. Cet effet d'amplification est d'autant plus remarquable que le taux massique de greffon est d'au moins 20%.

La figure 1 est une représentation de l'écart de rigidité entre les polymères modifiés et le SBR de départ en fonction du pourcentage massique de motif supplémentaire par rapport au SBR de départ. Le pourcentage massique de motif supplémentaire par rapport au SBR de départ non modifié est calculé par l'opération suivante :

$$\%\Delta m = = \%greffon + (\%styrène)_{modifié} - (\%styrène)_{départ}$$

%greffon et $(\%styrène)_{modifié}$ étant les pourcentages massiques respectifs de greffon sur le polymère modifié et de motif styrène dans le polymère modifié, les pourcentages étant calculés par rapport à la masse de polymère modifié, $(\% \text{ styrène})_{départ}$ étant le pourcentage massique de motif styrène dans le polymère de départ, calculé par rapport à la masse de SBR de départ.

Le SBR de départ se trouve par définition à l'intersection de l'axe des ordonnées et de l'axe des abscisses. Le SBR à 41% en masse de styrène est également représenté sur la figure 1 par un losange plein.

Le polymère C-3 est aussi représenté sur la figure 1 par un triangle plein. Le polymère C3 à 41% en masse de greffon, soit un pourcentage de motif supplémentaire d'environ 36% présente une rigidité inférieure à celle du SBR de départ d'environ 0,4 MPa, alors que sa Tg est plus haute de 88°C. A titre de comparaison, le SBR de Tg -25°C et à 41% en masse de styrène, soit un pourcentage de motif supplémentaire de 15% aussi, présente une rigidité inférieure à celle du SBR de départ d'environ 0,15 MPa, alors que sa Tg est plus haute seulement de 17°C par rapport à celle du SBR de départ.

La courbe en pointillé est la représentation graphique de la rigidité d'un polymère en fonction de la dilution par un plastifiant selon l'équation suivante (M. Rubinstein & R. H. Colby, Oxford University Press, 2003, Polymer Physics) :

$$G^*_{dilué} = G^*_{polymère} \text{ x } (\varphi_{polymère})^{2,3}$$

$G^*_{dilué}$ étant la rigidité du polymère après dilution par un plastifiant, $G^*_{polymère}$ étant la rigidité du polymère avant dilution, $\varphi_{polymère}$ étant la fraction massique du polymère dans le mélange de polymère et du plastifiant.

On observe, qu'à la précision de la mesure près, l'effet sur la rigidité d'un polymère que peut avoir un motif pendant sur la chaîne d'un polymère, qu'il s'agisse d'un greffon ou d'un motif styrène, est comparable à celui d'un plastifiant libre. La rigidité est principalement fonction du taux massique de groupe pendant, indépendamment de sa structure chimique. En première approximation, la rigidité des polymères ayant des greffons est comparable à celle des polymères ayant des motifs styrène au même taux massique. En revanche, comme mentionné précédemment, au même taux massique, la Tg des polymères ayant au moins 18% de greffons présente une Tg bien plus élevée qu'un polymère ayant des motifs styrène au même taux massique.

Comme les fortes variations de Tg sont possibles sans que le taux de greffon ne varie autant dès lors qu'il est d'au moins 18%, il apparaît que la rigidité fluctue relativement peu avec la Tg. Les polymères modifiés présentent un compromis Tg rigidité amélioré. Il s'en suit que les compositions de caoutchouc conformes à l'invention présentent un compromis Tg rigidité amélioré du point de vue de la performance adhérence usure d'un pneumatique dont la bande de roulement contient de telles compositions.

Tableau 1

| Polymère modifié | Oxyde de nitrile | % greffon | ΔTg (1) | Effet comparé (2) |
|---|---|---|---|---|
| A-1 | ON1 | 4 | 6 | +2 |
| A-2 | ON1 | 10 | 12 | +2 |

(suite)

| Polymère modifié | Oxyde de nitrile | % greffon | ΔTg (1) | Effet comparé (2) |
|---|---|---|---|---|
| A-3 | ON1 | 13 | 18 | +4 |
| A-4 | ON1 | 20 | 43 | +22 |
| A-5 | ON1 | 33 | 63 | +25 |
| B-1 | ON2 | 7 | 11 | +4 |
| B-2 | ON2 | 14 | 19 | +4 |
| B-3 | ON2 | 26 | 39 | +10 |
| C-1 | ON3 | 13 | 24 | +11 |
| C-2 | ON3 | 24 | 44 | +18 |
| C-3 | ON3 | 41 | 88 | +39 |
| D-1 | ON4 | 15 | 17 | +0 |
| D-2 | ON4 | 29 | 41 | +8 |
| D-3 | ON4 | 53 | 83 | +14 |

(1) $Tg_{modifié}$ - $Tg_{départ}$ ; $Tg_{modifié}$ étant la Tg du polymère modifié, $Tg_{départ}$ étant la Tg du SBR de départ,
(2) $Tg_{modifié}$ - $Tg_{départ}$ -($Tg_{th'SBR}$-$Tg_{BR}$),; $Tg_{modifié}$ étant la Tg du polymère modifié, $Tg_{départ}$ étant la Tg du SBR de départ, $Tg_{th'SBR}$ étant la Tg théorique d'un copolymère dont les unités sont de motif butadiène et de motif styrène, et qui a un taux massique de motif styrène égal au taux massique de greffon du polymère modifié.

**Revendications**

1. Composition de caoutchouc à base au moins d'un élastomère diénique modifié et d'une charge renforçante, lequel élastomère diénique modifié est le produit de réaction d'un élastomère diénique de départ et d'un oxyde de nitrile aromatique, composé comportant un noyau benzénique substitué par un dipôle oxyde de nitrile, le taux d'oxyde de nitrile aromatique greffé étant compris dans un domaine allant de 18% à moins de 50% en masse de l'élastomère diénique modifié, le noyau benzénique de l'oxyde de nitrile aromatique étant substitué par un ou plusieurs substituants dont un est en ortho du dipôle oxyde de nitrile.

2. Composition de caoutchouc selon la revendication 1 dans laquelle l'élastomère diénique de départ est choisi dans le groupe des élastomères constitué par les polybutadiènes, les polyisoprènes, les copolymères de 1,3-butadiène, les copolymères d'isoprène et leurs mélanges.

3. Composition de caoutchouc selon l'une quelconque des revendications 1 à 2 dans laquelle l'élastomère diénique de départ est choisi dans le groupe des élastomères constitué par les polybutadiènes, les polyisoprènes, les copolymères d'isoprène et de 1,3-butadiène, les copolymères de 1,3-butadiène et de styrène, les copolymères d'isoprène et de styrène, les terpolymères de 1,3-butadiène, d'isoprène et de styrène et leurs mélanges.

4. Composition de caoutchouc selon l'une quelconque des revendications 1 à 3 dans laquelle l'élastomère diénique de départ est un élastomère de synthèse.

5. Composition de caoutchouc selon l'une quelconque des revendications 1 à 4 dans laquelle le taux d'oxyde de nitrile aromatique greffé représente de 20 à 41% en masse de l'élastomère diénique modifié.

6. Composition de caoutchouc selon l'une quelconque des revendications 1 à 5 dans laquelle l'oxyde de nitrile aromatique est un monooxyde de nitrile.

7. Composition de caoutchouc selon l'une quelconque des revendications 1 à 6 dans laquelle les substituants du noyau benzénique sont, indépendamment les uns des autres, en ortho ou en méta du dipôle oxyde de nitrile.

8. Composition de caoutchouc selon l'une quelconque des revendications 1 à 7 dans laquelle les substituants du

noyau benzénique, identiques ou différents, sont un alkyle en C1-C2, un alkoxy en C1-C2 ou contiennent un cycle dont un atome est lié au noyau benzénique par l'intermédiaire de 3 liaisons au plus ou bien forment avec leurs plus proches voisins un cycle avec les atomes de carbone du noyau benzénique auxquels ils sont rattachés.

**9.** Composition de caoutchouc selon la revendication 8 dans laquelle l'alkyle est un méthyle.

**10.** Composition de caoutchouc selon la revendication 8 dans laquelle l'alkoxy est un méthoxy.

**11.** Composition de caoutchouc selon l'une quelconque des revendications 8 à 10 dans laquelle le cycle est de structure plane.

**12.** Composition de caoutchouc selon l'une quelconque des revendications 8 à 11 dans laquelle le cycle est un cycle à 5 ou 6 membres.

**13.** Composition de caoutchouc selon l'une quelconque des revendications 8 à 12 dans laquelle le cycle est un noyau benzénique ou un cycle imidazolyle.

**14.** Composition de caoutchouc selon l'une quelconque des revendications 1 à 13 dans laquelle l'oxyde de nitrile aromatique est le composé de formule (I), (II), (III), (IV) ou (V)

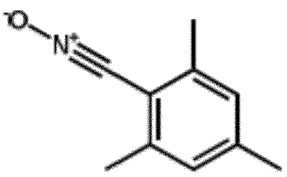

(I)

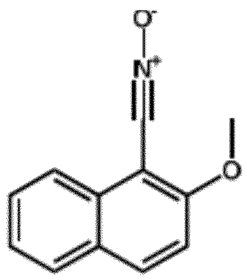

(II)

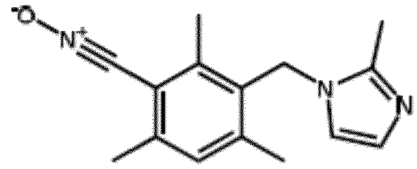

(III)

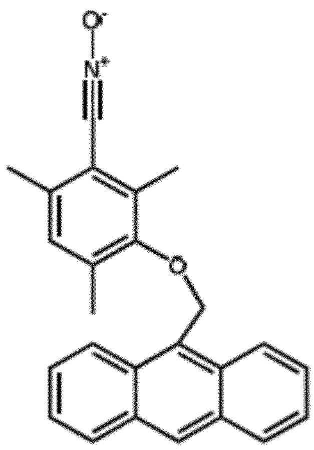

(IV)

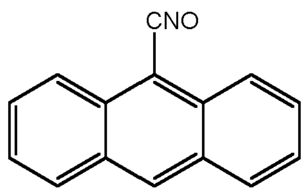

(V)

**15.** Pneumatique qui comprend une composition de caoutchouc selon l'une quelconque des revendications 1 à 14, de préférence dans sa bande de roulement.

## Patentansprüche

**1.** Kautschukzusammensetzung auf Basis von mindestens einem modifizierten Dienelastomer und einem verstärkenden Füllstoff, wobei das modifizierte Dienelastomer das Produkt der Reaktion von einem Ausgangsdienelastomer

und einem aromatischen Nitriloxid, bei dem es sich um eine Verbindung mit einem durch einen Nitriloxid-Dipol substituierten Benzolkern handelt, ist, wobei der Gehalt an aufgepfropftem aromatischem Nitriloxid in einem Bereich von 18 bis weniger als 50 Massen-% des modifizierten Dienelastomers liegt, wobei der Benzolkern des aromatischen Nitriloxids durch einen oder mehrere Substituenten substituiert ist, von denen einer in ortho-Position zu dem Nitriloxid-Dipol steht.

**2.** Kautschukzusammensetzung nach Anspruch 1, wobei das Ausgangsdienelastomer aus der Gruppe von Elastomeren bestehend aus Polybutadienen, Polyisoprenen, Copolymeren von 1,3-Butadien, Copolymeren von Isopren und Mischungen davon ausgewählt ist.

**3.** Kautschukzusammensetzung nach einem der Ansprüche 1 bis 2, wobei das Ausgangsdienelastomer aus der Gruppe von Elastomeren bestehend aus Polybutadienen, Polyisoprenen, Copolymeren von Isopren und 1,3-Butadien, Copolymeren von 1,3-Butadien und Styrol, Copolymeren von Isopren und Styrol, Terpolymeren von 1,3-Butadien, Isopren und Styrol und Mischungen davon ausgewählt ist.

**4.** Kautschukzusammensetzung nach einem der Ansprüche 1 bis 3, wobei es sich bei dem Ausgangsdienelastomer um ein synthetisches Elastomer handelt.

**5.** Kautschukzusammensetzung nach einem der Ansprüche 1 bis 4, wobei der Gehalt an aufgepfropftem aromatischem Nitriloxid 20 bis 41 Massen-% des modifizierten Dienelastomers ausmacht.

**6.** Kautschukzusammensetzung nach einem der Ansprüche 1 bis 5, wobei es sich bei dem aromatischen Nitriloxid um ein Nitrilmonooxid handelt.

**7.** Kautschukzusammensetzung nach einem der Ansprüche 1 bis 6, wobei die Substituenten des Benzolkerns unabhängig voneinander in ortho-Position oder in meta-Position zu dem Nitriloxid-Dipol stehen.

**8.** Kautschukzusammensetzung nach einem der Ansprüche 1 bis 7, wobei die Substituenten des Benzolkerns, die gleich oder verschieden sind, ein C1-C2-Alkyl oder ein C1-C2-Alkoxy sind oder einen Ring enthalten, von dem ein Atom über höchstens 3 Bindungen an den Benzolkern gebunden ist, oder auch mit ihren nächsten Nachbarn einen Ring mit Kohlenstoffatomen des Benzolkerns, an die sie gebunden sind, bilden.

**9.** Kautschukzusammensetzung nach Anspruch 8, wobei es sich bei dem Alkyl um ein Methyl handelt.

**10.** Kautschukzusammensetzung nach Anspruch 8, wobei es sich bei dem Alkoxy um ein Methoxy handelt.

**11.** Kautschukzusammensetzung nach einem der Ansprüche 8 bis 10, wobei der Ring eine planare Struktur aufweist.

**12.** Kautschukzusammensetzung nach einem der Ansprüche 8 bis 11, wobei der Ring ein 5- oder 6-gliedriger Ring ist.

**13.** Kautschukzusammensetzung nach einem der Ansprüche 8 bis 12, wobei der Ring ein Benzolkern oder ein Imidazolylring ist.

**14.** Kautschukzusammensetzung nach einem der Ansprüche 1 bis 13, wobei es sich bei dem aromatischen Nitriloxid um die Verbindung der Formel (I), (II), (III), (IV) oder (V) handelt:

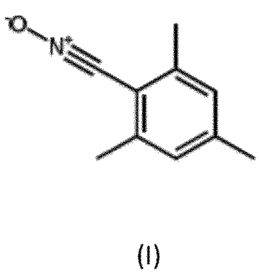

(I)

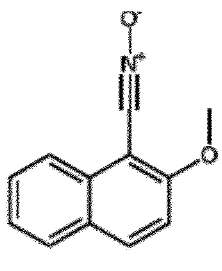

(II)

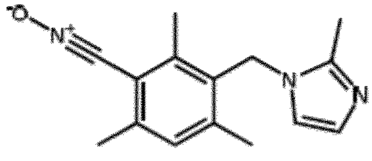

(III)

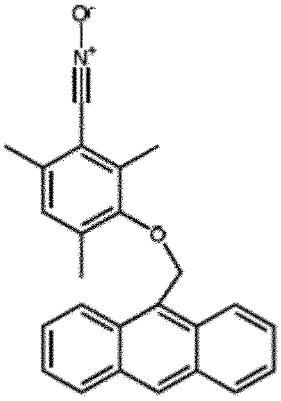

(IV)

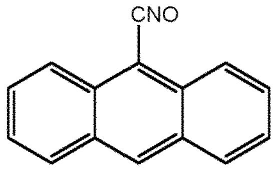

(V)

**15.** Reifen, der eine Kautschukzusammensetzung nach einem der Ansprüche 1 bis 14 umfasst, vorzugsweise in seiner Lauffläche.

## Claims

**1.** Rubber composition based on at least a modified dienic elastomer and a reinforcing filler, which modified dienic elastomer is the reaction product of a starting dienic elastomer and an aromatic nitrile oxide, compound with a benzene core substituted by a dipole nitrile oxide, the grafted aromatic nitrile oxide content being within the range of 18% to less than 50% by mass of the modified dienic elastomer, the benzene nucleus of the aromatic nitrile oxide being substituted by one or more substituents, one of which is ortho of the dipole nitrile oxide.

**2.** Rubber composition according to claim 1 in which the starting dienic elastomer is chosen from the group of elastomers consisting of polybutadiene, polyisoprene, 1,3-butadiene copolymers, isoprene copolymers and mixtures thereof.

**3.** Rubber composition according to any of Claims 1 to 2 in which the starting diene elastomer is selected from the group of elastomers consisting of polybutadiene, polyisoprene, isoprene and 1,3-butadiene copolymers, 1,3-butadiene and styrene copolymers, copolymers of isoprene and styrene, terpolymers of 1,3-butadiene, isoprene and styrene and mixtures thereof.

**4.** Rubber composition according to any of Claims 1 to 3 in which the starting dienic elastomer is a synthetic elastomer.

**5.** Rubber composition according to any of Claims 1 to 4 in which the grafted aromatic nitrile oxide content is 20 to 41% by mass of the modified dienic elastomer.

**6.** Rubber composition according to any of Claims 1 to 5 in which the aromatic nitrile oxide is a nitrile monoxide.

**7.** Rubber composition according to any of Claims 1 to 6 in which the substituents of the benzene ring are, independently of each other, ortho or meta of the dipole nitrile oxide.

**8.** Rubber composition according to any of Claims 1 to 7 in which the substituents of the benzene ring, identical or different, are a C1-C2 alkyl, a C1-C2 alkoxy, or contain a ring in which an atom is bound to the benzene ring by not more than 3 bonds or form with them a ring with the carbon atoms of the benzene ring to which they are attached.

**9.** Rubber composition according to claim 8 in which the alkyl is a methyl.

**10.** Rubber composition according to claim 8 in which the alkoxy is a methoxy.

**11.** Rubber composition according to any of claims 8 to 10 in which the cycle is a plane structure one.

**12.** Rubber composition according to any of claims 8 to 11 in which the ring is a 5- or 6-membered ring.

**13.** Rubber composition according to any of claims 8 to 12 in which the ring is a benzene core or an imidazolyl ring.

**14.** Rubber composition according to any of claims 1 to 13 in which the aromatic nitrile oxide is the compound of the formula (I), (II), (III), (IV) ou (V)

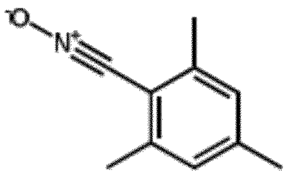

(I)

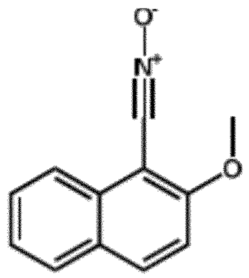

(II)

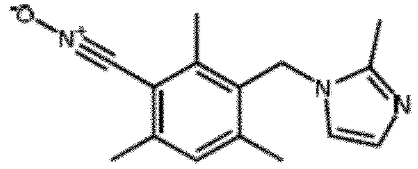

(III)

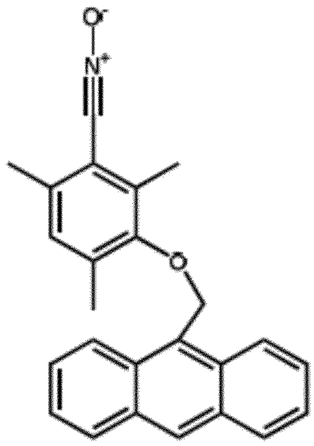

(IV)

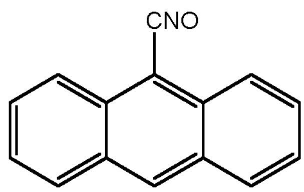

(V)

**15.** Tyre which comprises a rubber composition according to any of Claims 1 to 14, preferably in its tread.

Figure 1

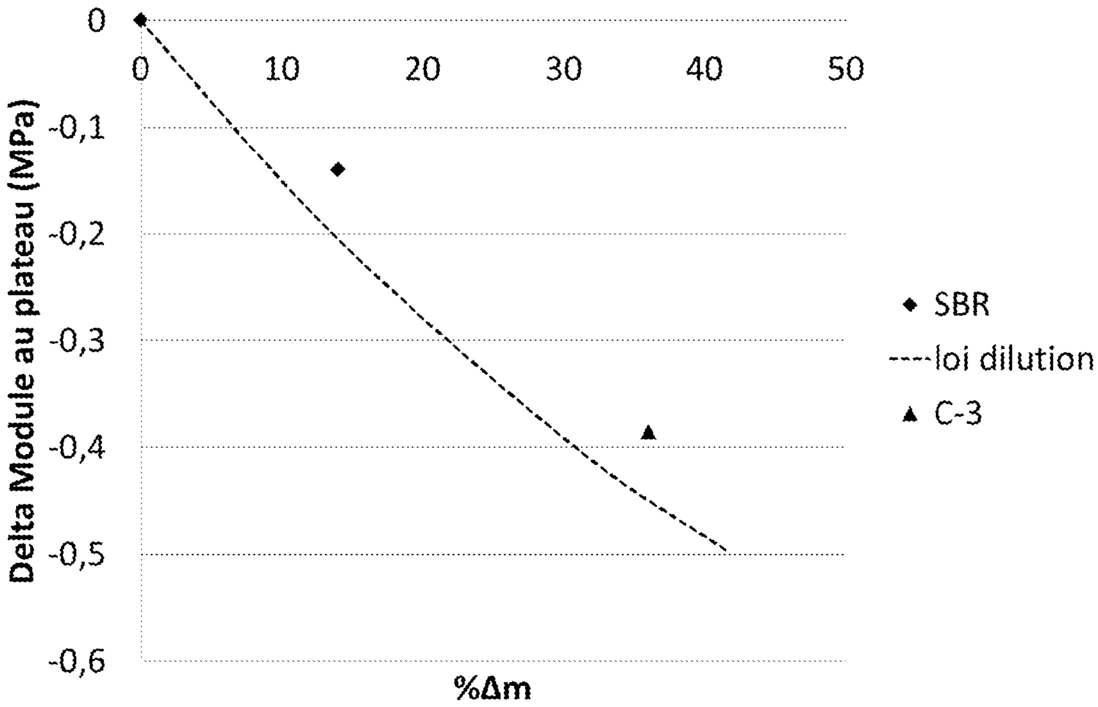

0
-0,1
-0,2
-0,3
-0,4
-0,5
-0,6
0
10
20
30
40
50
Delta Module au plateau (MPa)
%Δm
SBR
loi dilution
C-3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Littérature non-brevet citée dans la description


- **C. LIU ; J. HE ; E. VAN RUYMBEKE ; R. KEUNINGS ; C. BAILLY.** Evaluation of different methods for the détermination of the plateau modulus and the entanglement molecular weight. *Polymer,* 2006, vol. 47, 4461-4479
- **FOX, T. G.** *Bull. Am. Phys. SOC.,* 1956, vol. 2, 123
- **M. RUBINSTEIN ; R. H. COLBY.** Polymer Physics. Oxford University Press, 2003